(19) Europäisches Patentamt European Patent Office Office européen des brevets

(11) **EP 2 541 052 B1**

(12) **EUROPEAN PATENT SPECIFICATION**

(45) Date of publication and mention of the grant of the patent:
**30.04.2014  Bulletin 2014/18**

(51) Int Cl.:
***F03D 7/04*** (2006.01)

(21) Application number: **11172196.5**

(22) Date of filing: **30.06.2011**

(54) **Controlling a wind turbine using a neural network function**

Steuerung einer Windturbine mittels neuronaler Netzwerkfunktion

Commande d'une éolienne au moyen d'une fonction de réseau neural

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2013  Bulletin 2013/01**

(73) Proprietor: **Siemens Aktiengesellschaft 80333 München (DE)**

(72) Inventors:
 • **Obradovic, Dragan 85521 Ottobrunn (DE)**
 • **Egedal, Per 7400 Herning (DK)**

(56) References cited:
**GB-A- 2 476 316**

• **T. Mikkelsen ET AL: "Lidar Wind Speed Measurements form a Rotating Spinner", , 23 April 2010 (2010-04-23), XP55012750, Warsaw, Poland Retrieved from the Internet: URL:http://www.google.nl/url?sa=t&rct=j&q= mikkelsen%20hansen%20angelou&source=web &cd =2&ved=0CCkQFjAB&url=http%3A%2F%2Forbit .dt u.dk%2FgetResource%3FrecordId%3D259451% 26o bjectId%3D1%26versionId%3D1&ei=OL_ MTrjVI4_ pOYya7YYP&usg=AFQjCNETTcMM8t7RI_ NNhxna2mga aixATw&cad=rja [retrieved on 2011-11-22]**
• **Rc Chakraborty: "Fundamentals of Neural Networks", , 10 August 2010 (2010-08-10), pages 1-40, XP55012722, Retrieved from the Internet: URL:http://www.myreaders.info/02-Fundament als_of_Neural_Network.pdf [retrieved on 2011-11-22]**

**Description**

Field of invention

The present invention relates to a method and an arrangement for determining optimized parameters of a target function for controlling a wind turbine and to a method for controlling a wind turbine using the target function, wherein the target function is described by parameters which are optimized regarding power production of the wind turbine and load experienced by the wind turbine.

Art Background

A wind turbine may comprise a wind turbine tower, a nacelle mounted on top of the wind turbine tower, a rotation shaft rotatably supported within the nacelle, one or more rotor blades connected to the rotation shaft at one end, and a generator mechanically connected to the rotation shaft at another end. Upon impact of wind onto the one or more rotor blades, the rotor blades receive mechanical energy from the wind causing them to rotate around the rotation axis defined by the rotation shaft. In turn, the rotation shaft drives the generator, in order to produce electric energy from the impacting wind.

It may be necessary to control operational parameters of the wind turbine, in order to optimize power production. Further, it may be necessary to control operational parameters of the wind turbine, in order to keep mechanical and/or electrical and/or electronically load of components of the wind turbine within acceptable limits, in order to prolong the lifetime of the wind turbine.

It has been observed that controlling a wind turbine may not always achieve the desired effects, in particular regarding power production efficiency and at the same time keeping the mechanical and/or electrical and/or electronic loads of components of the wind turbine within acceptable limits.

There may be a need for a method and for an arrangement for determining optimized parameters of a target function for controlling a wind turbine and there may be a need for a method for controlling a wind turbine, wherein the target function having the optimized parameters is used, in order to derive adjustment signals for adjusting mechanical and/or electrical components of the wind turbine. GB 2476316 discloses a predictive controller using a wind signal to generate rolling time series representations of incoming wind speed, minimizing a cost function and producing an output control signal.

Summary of the Invention

This need may be met by the subject matter according to the independent claims. Advantageous embodiments of the present invention are described by the dependent claims.

According to an embodiment of the present invention, a method for determining (in particular including computing, deriving or calculating) optimized parameters (in particular comprising a set of scalar values, such as 10 to 200 values, in particular 20 to 100 values) of a target function (in particular depending on a scalar argument, such as the time, and mapping the scalar argument to two scalar components, such as one component representing a rotor blade pitch angle and one component representing a generator torque of the wind turbine, such that the target function is composed of two target function components) for controlling (in particular including or comprising supplying control signals to components of the wind turbine, such as supplying a rotor blade pitch angle signal to an actuator which is enabled for actuating or turning or rotating at least one rotor blade around its longitudinal axis being oriented perpendicular to the rotation shaft, and for supplying a generator torque signal for adjusting a torque exerted by the generator on the rotation shaft, in order to adjust the power extracted from the rotating rotation shaft) a wind turbine is provided. Thereby, the method comprises receiving (in particular comprising measuring, estimating, predicting and/or computing) or estimating a wind signal (such as an electrical signal or an optical signal) indicating a wind speed (close to the wind turbine or a wind speed related to a location spaced apart from the wind turbine) at a point in time; describing (in particular comprising parameterizing or establishing or defining) the target function by parameters (in particular comprising a set of scalar values); optimizing (in particular comprising determining the parameters such that the cost function adopts a maximum, involving selecting the optimized parameters or deriving the optimized parameters by numerical analysis) the parameters based on the wind signal (and in particular further based on a dynamical model or mathematical expressions describing the dynamics of the system) such that a cost function (in particular being dependent on the power production and the load experienced by the wind turbine) being dependent on the target function (such that if the target function changes also the value of the cost function changes, wherein the cost function may be dependent on a first component of the target function as well as dependent on a second component of the target function) adopts an extremum (in particular a maximum), in order to derive optimized parameters (which then describe the target function, while the cost function adopts the extremum) to be used for controlling (in particular for supplying control signals to the wind turbine) the wind turbine at the point in time.

In particular, the target function being defined by the optimized parameters may enable to calculate or obtain or estimate or approximate a time course of control variables of the wind turbine, in particular to derive a time course of a rotor blade pitch angle and/or a time course of a generator torque, wherein the time course represents values of the control variables at time instances after the point of time. In particular, it may be necessary to take into account the time instances of the control variables after the point in time, in order to derive the cost associated with the control variables across a certain time interval, in order to find a compromise between enhancing power output and reducing the load when taken across the time interval including plural time instances after the point in time. By the parametrization the time course of the blade pitch angle and/or the torque may be described in a simple way, in particular requiring less computer power and/or memory and/or computing time.

According to an embodiment of the present invention, the target function maps time (or for example a state variable of the wind turbine) to a first component representing a blade pitch angle and to a second component representing a generator torque or generator power (the generator torque being the torque exerted by the generator on the rotation shaft while extracting energy from the rotation shaft) and wherein the parameters of the target function include a first set of parameters relating to the first component of the target function and a second set of parameters relating to the second component of the target function. The target function may be considered to represent two target function components (or even more target function components such as three, four, five, six, seven or two to twenty). In particular two or more components may be considered in the cost function. Thus, the target function may be considered or represented as a vector valued function (having 1 to N components, where N is an integer) being dependent on a scalar argument. In particular, the time may be mapped to two scalar values by the target function.

By describing the target function using parameters it may not be necessary to consider a potentially large number of discretized values when evaluating the cost function, in order to determine optimized values for the plural discrete control variables. Thereby, a computation time may be reduced and an arrangement for controlling the wind turbine may be simplified. Further, correlations between values of the control variables (such as rotor blade pitch angle and generator torque) at different time points may be taken into account for improving the control method. Further, by requiring to determine only a small number of parameters the optimization problem may be simplified or accelerated.

By designing the target function to represent both a blade pitch angle and a generator torque suitable control variables of a wind turbine may be represented and controlled.

A blade pitch angle may represent an angle of rotation of a rotor blade connected to the rotation shaft, wherein the angle of rotation is defined around a longitudinal axis of the rotor blade, wherein the longitudinal axis of the rotor blade may run perpendicular to the axis of the rotation shaft to which the rotor blade is connected. Adjusting the rotor blade pitch angle may change the energy transfer efficiency of the energy transfer from the wind to the rotor blade and thus the rotation shaft. Thereby, both energy or power production of the wind turbine may be affected as well as mechanical and/or electrical loads on components of the wind turbine.

Further, changing the generator torque may also affect energy or power production by the wind turbine and may also affect mechanical and/or electrical loads of the wind turbine. Thereby, the wind turbine may be appropriately controlled in order to maximize power output while at the same time considering potentially harmful mechanical and/or electrical loads on components of the wind turbine.

According to an embodiment of the present invention, for a time instance t each the first component and/or the second component is representable by $y(t) = B + Sum[c_j * G_j(b_j + a_j*t)]$, wherein the Sum is derived by running j over N values (e.g. 1 to N), wherein $B$, $c_j$, $b_j$, $a_j$ are scalar constants to be optimized, wherein $G_j$ are scalar valued predetermined activation functions, in particular non-linear functions, and wherein the $c_j$, $b_j$, $a_j$ and $G_j$ for the first component form the first set of parameters of the target function and/or wherein the $c_j$, $b_j$, $a_j$ and $G_j$ for the second component form the second set of parameters of the target function.

In particular, the rotor blade pitch angle and the generator torque (or in general one or more control variables of the wind turbine) may be approximated regarding their time courses by a neural network function which is known to be able to approximate any continuous, in particular non-linear, function. In particular, the neural network approximation represented by the target function may be a stable approximation, in contrast for example to an approximation using polynomials. In particular, no fitting is involved in order to derive the parameters of the target function. The parameters of the neural networks may now be the parameters on which the cost function depends on. Hence, the neural network parameters may be optimized by a suitable non-linear optimization algorithm which can handle constraints (e.g. using Matlab optimization toolbox or other available public or proprietary programs which are known to the skilled person) .

In particular, any continuous function (which the discrete control variables are assumed to follow) may be represented as a particular sum of non-linear activation functions. Thereby, in particular, a relatively small number of parameters may be sufficient to accurately describe or represent the time courses of the control variables, such as the rotor blade pitch angle and/or the generator torque.

In particular, when considering or optimizing the cost function the relatively large number of discrete values of the control variables do not need to be considered any more. Instead, the target function may just be evaluated at the plurality of time instances required to derive or consider or optimize the cost function. Thereby, calculation or optimization of the cost function and thus determining the control variables as values of the target function at particular time instances may be simplified.

According to an embodiment of the present invention, the activation functions include a sigmoidal function (or sigmoid function, in particular having an "S"-shape being in particular monotonically increasing starting at a relatively small slope, then increasing its slope and decreasing again its slope) and/or a radial-basis function (in particular being a function symmetric to the origin or symmetric to a particular point, such that the value of the radial-basis function depends only on the distance of the considered point to the predetermined center point, the radial-basis function being in particular a Gaussian function, such as a bell curve, a multi-quadratic function, an inverse quadratic function, an inverse multi-quadratic function, a polyharmonic spline, a thin plate spline or the like), in particular a hyperbolic function (such as sine hyperbolic function, cosine hyperbolic function), further in particular a hyperbolic tangent function (tanh). In particular the activation functions may be non-linear functions. Thereby, approximation of discrete control variable values may be appropriately performed, wherein only a relatively small number of parameters is required, in order to simplify and/or accelerate the optimization process for maximizing the cost function and thereby optimizing the parameters.

According to an embodiment of the present invention, the target functions describe time evolution over 5 s to 40 s, in particular over 10 s to 20 s. In particular, the time evolution may be the time evolution of the rotor blade pitch angle and/or the time evolution of the generator torque. In particular, time evolution over 5 s to 40 s may be required to be considered while optimizing the parameters such that the cost function adopts the extremum, because the rotation shaft together with the mounted rotor blade may represent a considerable inertia leading to a delayed response of the rotational speed, when the generator torque and/or the rotor blade pitch angle is changed. Thereby, optimization or maximization of the power output of the wind turbine may be further improved.

According to an embodiment of the present invention, the optimizing the parameters of the target function further comprises considering (in particular comprising taking into account during the computation), in the cost function, a plurality of values of the target function taken at a plurality of, in particular equidistant, time points after the point in time, wherein a number of the time points after the point in time is larger, in particular by a factor between 2 and 50, in particular 10, larger, than a number of the parameters of the target function. Thereby, a considerable advantage of using the target function described by the relatively small number of parameters for determining optimized control variables may be achieved.

According to an embodiment of the present invention, a time distance between subsequent time points of the plurality of the time points after the point in time is between 5 ms and 1 s, in particular between 10 ms and 300 ms. Thereby, the time distance may be small enough to control the wind turbine at all of the time points, as may be necessary to control the wind turbine, to enhance (or optimize) its power production and at the same time keeping the loads in acceptable limits.

According to an embodiment of the present invention, in the cost function, the wind speed is considered to be constant over the plurality of time points after the point in time. Thereby, it may not be necessary to predict the wind speed for simplifying the method. In particular, within a time interval of a few hundred ms or of 1 s to 5 s the wind speed may not change to a significant amount during the majority of operation conditions or weather conditions.

According to an embodiment of the present invention, in the cost function, the wind speed at the plurality of time points after the point in time is predicted, in particular based on information relating to previous wind speed, information relating to other weather parameters or meteorological models or simulations used for weather forecasting. Thereby, the control method may further be improved.

According to an embodiment of the present invention, the method further comprises receiving a further wind signal indicating a further wind speed at a further point in time after the point in time; describing a further target function by further parameters; optimizing the further parameters based on the further wind signal such that the cost function being dependent on the further target function adopts an extremum, in order to derive further optimized parameters to be used for further controlling the wind turbine at the further point in time.

In particular, the optimization of the cost function may be recursively performed over a finite time horizon, wherein the finite time horizon comprises the plurality of time points. At each time point a number of time points in the future lying within the finite time horizon are considered when evaluating the cost function. Thereby, the wind turbine may continuously be controlled. Thereby, at each control step only the control variable value represented by evaluating the target function within the finite time horizon are considered. At the next time point, the finite time horizon is shifted such that at every time point a same number of time points are considered for deriving or evaluating the cost function and thus optimizing the parameters for this particular time point.

According to an embodiment, the cost function depends on a power output and in particular on a load (electrical, mechanical and/or electronic) of the turbine. In particular, the method may be aimed for maximizing the cost function, wherein the weight of the load may be adjusted using a particular weight factor which may depend on the application, type of turbine, etc.

According to an embodiment of the present invention, the method further comprises ensuring (in particular involving or comprising adjusting or controlling) that the first component and/or the second component lies below a threshold (in particular below a maximal power threshold or a maximal torque threshold, respectively) and/or lies within a predetermined range (in particular a predetermined rotor blade pitch angle range) and/or changes over time within a predetermined change range (in particular such that a change of the considered component or control variable is restricted, in order to avoid damage of components of the wind turbine). Thereby, the operation of the turbine may be performed in a secure manner reducing the risk of damage of components of the wind turbine. Further, the wind turbine may satisfy local regulations, regarding power output, noise emissions, etc.

According to an embodiment of the present invention, the method further comprises optimizing the blade pitch at the point in time and/or optimizing the generator torque at the point in time and optimizing the parameters of the target function such that the cost function which is further dependent on the blade pitch at the point in time and/or dependent on the generator torque at the point in time adopts the extremum. Thus in particular one or more discrete value(s) of the rotor blade pitch and/or one or more discrete value(s) of the generator torque may be directly used when evaluating the cost function without evaluating the target function in order to derive the rotor blade pitch angle and the generator torque therefrom.

Further, the explicit rotor blade pitch angle value(s) and/or the explicit generator torque value(s) may be considered in evaluating the cost function across a certain time range and across another time range the evaluated target function may be considered. Thereby, a hybrid method of using discrete control variable values and values derived by evaluating the target function may be performed, requiring the optimization of the parameters of the target function and also optimization of the discrete control variable values across the certain time interval. Thereby, the control method may further be improved, in particular regarding accuracy.

According to an embodiment of the present invention, a method for controlling a wind turbine is provided, wherein the method comprises performing a method for determining optimized parameters of a target function for controlling a wind turbine according to one of the embodiments as described above; evaluating the target function at the point in time, the target function being described by the determined optimized parameters; and controlling the wind turbine, in particular a rotor blade pitch angle and/or a generator torque, based on a result of the evaluating the target function. Thereby, the wind turbine may be controlled for achieving maximal power output and at the same time keeping the mechanical and/or electrical and/or electronic load in acceptable ranges.

It should be understood that features (individually or in any combination) disclosed, described, mentioned, explained or employed for a method for determining optimized parameters of a target function or to a method for controlling a wind turbine may (individually or in any combination) also be applied, used for or adapted for an arrangement for determining optimized parameters of a target function for controlling a wind turbine according to an embodiment of the present invention and vice versa.

According to an embodiment of the present invention, it is provided an arrangement for determining optimized parameters of a target function for controlling a wind turbine, the arrangement comprising an input terminal adapted to receive a wind signal indicating a wind speed at a point in time; a computing module adapted to describe a target function by parameters and to optimize the parameters based on the wind signal such that a cost function being dependent on the target function adopts an extremum, in order to derive optimized parameters to be used for controlling the wind turbine at the point in time.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Brief Description of the Drawings

Embodiments of the present invention are now described with reference to the accompanying drawings. The invention is not limited to the illustrated or described embodiments.

Fig. 1 schematically illustrates a neural network for defining a target function described by parameters, which target function is used in a method for controlling a wind turbine according to an embodiment of the present invention;

Fig. 2 schematically illustrates a time course of a control variable used in a method for controlling a wind turbine according to an embodiment of the present invention at plural time instances, wherein at each time instance control variables are considered over a finite time horizon;

Fig. 3 schematically illustrates a controller for performing a method for controlling a wind turbine according to an embodiment of the present invention.

Detailed Description

The illustration in the drawings is in schematic form.

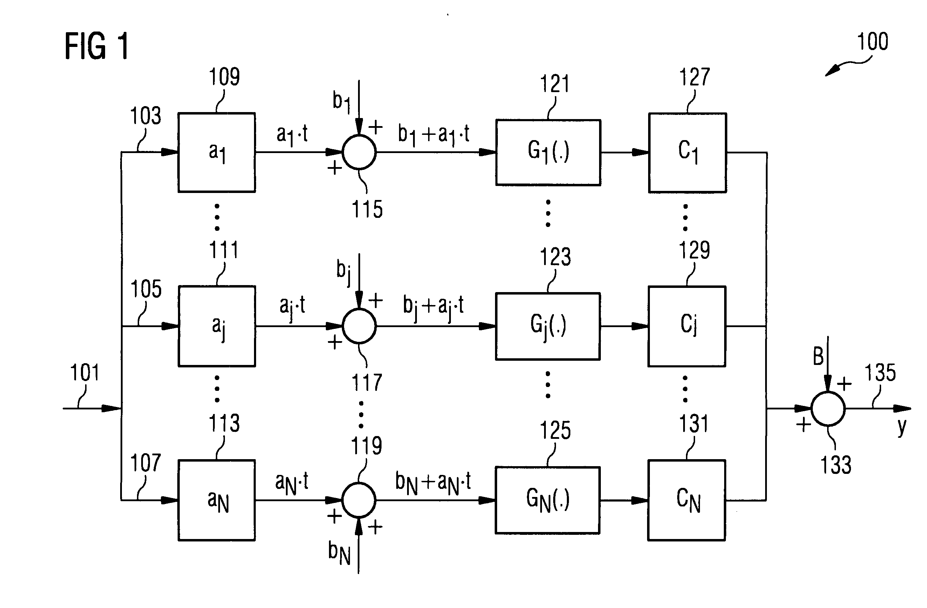

Fig. 1 schematically illustrates a neural network 100 for defining a target function described by parameters according to an embodiment of the present invention. The neural network 100 depicted in Fig. 1 receives as input 101 the time t. The input 101 is supplied to plural branches (in fact N branches, where N is an integer) from which only the branches 103, 105 and 107 are depicted explicitly in Fig. 1. These branches 103, 105, 107 lead to scaling operations 109, 111 and 113 where the input time t is multiplied by N different scalar factors $a_1$ to $a_j$ to aN.

The scaled input 101 is then supplied to adding elements 115, 117, 119 where different constants $b_1$ to $b_j$ to $b_N$ are added. The scaling processes 109, 111 and 113 and the adding elements or adding processes 115, 117, 119 may also be considered to belong to a first layer of the neural network 100 comprising the linear scaling and the adding of bias factors.

The result of the linear scaling and the adding of bias factors is supplied as arguments to activation functions 121, 123, 125 which represent in fact N different activation functions, in particular representing a middle layer of the neural network 100.

The result of applying the activation functions to the linear scaled and bias added input time is supplied to further scaling elements or scaling processes 127, 129, 131 and the results of the scaling are supplied to a adding element 133 where the N results are added together and further a scalar content B is added to finally derive the output 135 which may be denoted y in particular y(t) which may be a scalar. In particular y(t) may represent (one component of) the target function which are described by the parameters $a_j$, $b_j$, and $c_j$ and additionally B. Thus, the target function y(t) comprises overall 3N+1 parameters. A target function may be derived for the rotor blade pitch angle and the generator torque.s The target function y(t) may be represented as:

$$y = B + \underline{c}^T \cdot \underline{G}(\underline{b} + \underline{a} \cdot t)$$

It has a number of

$$N+N+N+1=3N+1$$

parameters.

The parameters are optimized according to an embodiment of the present invention by maximizing or optimizing the following cost function:

$$\max_{\substack{Parameters(NN_\beta) \\ Parameters(NN_{Mg})}} \sum_{i=1}^{N} \left[ P_i - \alpha \cdot MechLoad_i \right]$$

$$\beta(i) = f_\beta(i \cdot \Delta) = NN_\beta(i \cdot \Delta)$$
$$M_g(i) = f_{M_g}(i \cdot \Delta) = NN_{M_g}(i \cdot \Delta)$$

$$\beta_{min} \le \beta \le \beta_{max}$$

$$P \le P_{max}$$

$$M_g \leq P_{max} / \omega_{g\_no\,min\,al}$$

$$\omega_{g\_min} \leq \omega_g \leq \omega_{g\_max}$$

Herein $P_i$ represents the power output of the wind turbine at a time instance indexed with I and MechLoad$_i$ denotes the mechanical load of the wind turbine at time instance i. Thereby, the power output of the wind turbine depends on the control variables $\beta(i)$, denoting the rotor blade pitch angle at time instance i and Mg(i) denoting the generator torque exerted on the rotation shaft at time instance i.

The dynamics of the turbine may be described by the following model:

$$\dot{\omega}_r(t = i) \approx \frac{\omega_r(i+1) - \omega_r(i)}{\Delta} =$$

$$\frac{1}{J_r}\left( \frac{C_p(V_w(i), \omega_r(i), \beta(i)) \cdot \rho R^2 \pi V_w^3(i)}{2\omega_r(i)} - GB_{rg} \cdot \left[ K_f \cdot GB_{rg} \cdot \omega_r(i) + \frac{1}{\eta} \cdot M_g(i) \right] \right)$$

$$P(i) = \omega_g(i) \cdot M_g(i) = GB \cdot \omega_r(i) \cdot M_g(i)$$

Thus, the power output $P_i$ depends on the rotational speed $\omega(i)$ of the rotor and the generator torque Mg(i) at time point I and the rotational speed $\omega(i)$ changes depending on the rotor blade pitch angle on the generator torque. Thus, for optimizing the target function over a finite time horizon the rotor blade pitch angle on the generator torque must be defined at discrete time points across the time horizon.

Thereby, the rotor blade pitch angle at time instance i is obtained by evaluating the target function $f_\beta$ (obtained by optimizing the parameters using the neural network 100 depicted in Fig. 1) at the time instance i. Further, the generator torque at time instance i is obtained by evaluating a further target function $f_{Mg}$ (also obtained by optimizing the parameters of the neural network 100 depicted in Fig. 1) at the time instance i. In particular, the two neural network target functions $NN_\beta$ and $NN_{Mg}$ may be considered or represented as two components of a vector valued target function.

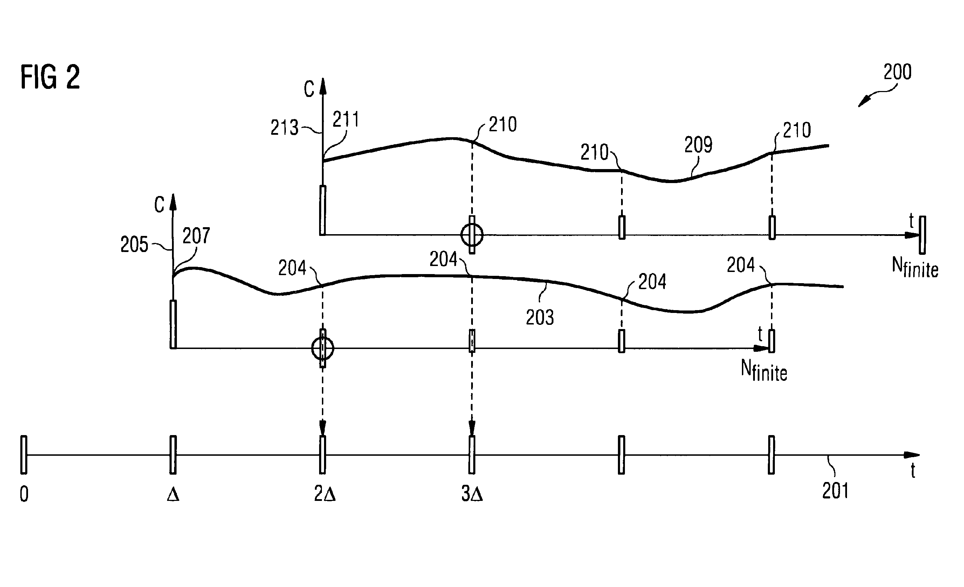

**Fig. 2** schematically illustrates a time course of control variable used in a method for controlling a wind turbine according to an embodiment of the present invention. The lower horizontal line 201 represents the time t when discretized at plural time instances 0, $\Delta$, $2\Delta$, $3\Delta$, ...

The middle line or middle graph represents by a curve 203 a target function for a control variable c depicted on an ordinate 205 of the middle graph in Fig. 2. The curve 203 depicts a time course over a finite number $N_{finite}$ of time instances. Evaluation of the target function 203 at the time instance $\Delta$ defines the value of the control variable c at this time instance. The control variable c may for example represent the rotor blade pitch angle or the generator torque. The value 207 of the control variable c at time instance $\Delta$ may be supplied to the wind turbine to control the rotor blade pitch angle or the generator torque accordingly.

After the wind turbine has been controlled at the time instance $\Delta$, a further time window or time horizon having the same size is considered but now shifted to have its origin at the next time instance, i.e. at $2\Delta$, as illustrated in the upper graph in Fig. 2. Again for this next time instance, the optimization problem as described above is solved in order to determine optimized parameters for defining a target function for the rotor blade pitch angle and also a target function for the generator torque. The target function finally obtained by solving the optimization problem at time instance $2\Delta$ is depicted as curve 209 which has similarities to the target function at time instance $\Delta$ (curve 203) but deviates slightly from this previous target function, since the time window has shifted to the right and (wind) conditions may have changed.

The target function 209 for this next time instance $2\Delta$ is depicted in the upper graph of Fig. 2 having an ordinate 213 along which the values of the control variable c are indicated. In particular, the control variable c (for example the rotor blade pitch angle or the generator torque) has a value 211 at the next time instance $2\Delta$ according to which the wind turbine is controlled. As can be seen from Fig. 2, the values of the control variable c at the plural discrete time instances can be obtained at points 204 for the target function 203 and at points 210 for the target function 209. In particular, the number of discrete control variables within the finite time horizon is larger than the number of parameters required to describe the target functions 203 or 209.

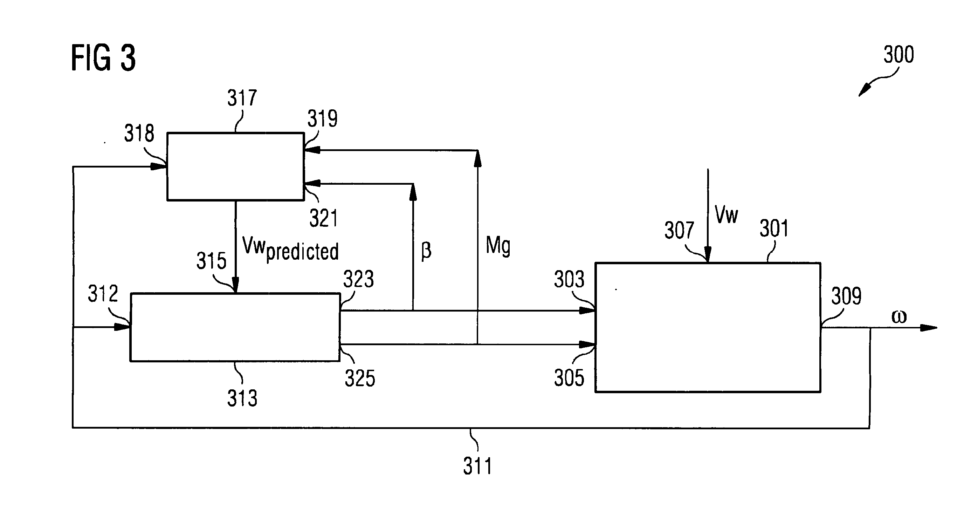

Fig. 3 schematically illustrates a wind turbine system 300 comprising an arrangement for controlling the wind turbine according to an embodiment of the present invention.

The wind turbine 301 receives at the terminal 303 a control signal representing a rotor blade pitch angle β and receives at the terminal 305 a control signal representing the generator torque Mg. Further, the wind turbine receives at a further input terminal 307 the wind speed Vw. Based on the control signals received at the terminals 303, 305 the wind turbine adjusts the rotor blade pitch angles and also the generator torque.

At an output terminal 309 the wind turbine outputs the rotational speed ω of the rotation shaft. The rotational speed ω is fed via a line 311 to input 312 of a model predictive controller 313 which is adapted to perform an optimization procedure for optimizing the cost function described above by approximating the discrete values of the control variables β (rotor blade pitch angle) and Mg (generator torque) by respective neural network target functions which are described by optimized parameters. In other embodiments besides the rotation speed ω, also other information about the turbine state can be sent to the input 312 of the model predictive controller 313 (for example the tower position "x", velocity or acceleration). All these values or signals may be considered in the cost function.

For optimization the controller 313 receives at an input terminal 312 the rotation speed ω of the rotation shaft. Further, the controller 313 receives at another input terminal 315 the wind speed Vw at a particular time instance and may also receive predicted wind speeds at subsequent time instances.

In particular, the predicted wind speeds are obtained using the wind prediction module 317 which also receives at input terminals 319 and 321 the rotor blade pitch angle β and the generator torque Mg, respectively. In particular, the rotor blade pitch angle at a particular time instance is output by the controller 313 at an output terminal 323 by evaluating the determined target function at the particular time instance. In analogy the generator torque Mg is output by the controller 313 at a further output terminal 325 by evaluating the respective target function after optimization of its parameters at the particular time instance. Further, the wind prediction module 317 also receives at an input terminal 318 the rotor speed ω of the wind turbine.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for determining optimized parameters (aj, bj, cj, B) of a target function (y(t)) for controlling a wind turbine (301), the method comprising:

   - receiving a wind signal (Vw) indicating a wind speed at a point in time (Δ);
   - describing the target function by parameters (aj, bj, cj, B);
   - optimizing the parameters based on the wind signal such that a cost function being dependent on the target function adopts an extremum, in order to derive optimized parameters to be used for controlling the wind turbine at the point in time,

   wherein the target function maps time (t) to a first component representing a blade pitch angle (β) and to a second component representing a generator torque (Mg) or generator power and wherein the parameters include a first set of parameters relating to the first component and a second set of parameters relating to the second component, wherein for a time instance t each the first component and/or the second component is representable by:

$$y(t) = B + \text{Sum}[c_j * G_j(b_j + a_j * t)],$$

   wherein the Sum is taken by running j over N values,
   wherein $B$, $c_j$, $b_j$, $a_j$ are scalar constants to be optimized, wherein $G_j$ are scalar valued predetermined activation functions, in particular non-linear functions, and
   wherein the $c_j$, $b_j$, $a_j$ and $G_j$ for the first component form the first set of parameters of the target function and/or wherein the $c_j$, $b_j$, $a_j$ and $G_j$ for the second component form the second set of parameters of the target function.

2. Method according to claim 1, wherein the activation functions ($G_j$) include a sigmoidal function and/or a radial-basis function, in particular a hyperbolic function, further in particular a hyperbolic tangent function.

3. Method according to any of the preceding claims, wherein the target functions describe time evolution over 5 s to 40 s, in particular over 10 s to 20 s.

4. Method according to any of the preceding claims, wherein the optimizing the parameters further comprises:

   - considering, in the cost function, a plurality of values of the target function taken at a plurality of, in particular equidistant, time points ($\Delta, 2*\Delta, 3*\Delta, ...$) after the point in time,

   wherein a number of the time points ($N_{finite}$) after the point in time is larger, in particular by a factor between 2 and 50, in particular 10, larger, than a number ($3*N + 1$) of the parameters.

5. Method according to claim 4, wherein a time distance ($\Delta$) between subsequent time points of the plurality of the time points ($\Delta, 2*\Delta, 3*\Delta, ...$) after the point in time is between 5 ms and 1 s, in particular between 10 ms and 300 ms.

6. Method according to claim 4 or 5, wherein, in the cost function, the wind speed ($V_w$) is considered to be constant over the plurality of time points after the point in time.

7. Method according to claim 4 or 5, wherein, in the cost function, the wind speed ($V_w$) at the plurality of time points after the point in time is predicted.

8. Method according to any of the preceding claims, further comprising:

   - receiving a further wind signal indicating a further wind speed at a further point in time after the point in time;
   - describing a further target function by further parameters;
   - optimizing the further parameters based on the further wind signal such that the cost function being dependent on the further target function adopts an extremum, in order to derive further optimized parameters to be used for further controlling the wind turbine at the further point in time.

9. Method according to any of the preceding claims, wherein the cost function depends on a power output ($P$) and in particular on a load (MechLoad) of the turbine.

10. Method according to any of claims 1 to 9, further comprising:

    - ensuring that the first component and/or the second component lies below a threshold and/or lies within a predetermined range and/or changes over time within a predetermined change range.

11. Method according to any of the claims 1 to 10, further comprising:

    - optimizing the rotor blade pitch angle at the point in time and/or optimizing the generator torque at the point in time and optimizing the parameters such that the cost function which is dependent on the blade pitch at the point in time and/or dependent on the generator torque at the point in time adopts the extremum.

12. Method for controlling a wind turbine (301), the method comprising:

    - performing a method for determining optimized parameters of a target function ($y(t)$, 203, 209) for controlling a wind turbine according to one the preceding claims;
    - evaluating the target function at the point in time, the target function being described by the determined optimized parameters; and
    - controlling the wind turbine, in particular a rotor blade pitch angle ($\beta$) and/or a generator torque ($M_g$), based on a result of the evaluating the target function.

13. Arrangement (313) for determining optimized parameters ($a_j$, $b_j$, $c_j$, $B$) of a target function ($y(t)$) for controlling a wind turbine, the arrangement comprising:

    - an input terminal (315) adapted to receive a wind signal ($V_w$) indicating a wind speed at a point in time;
    - a computing module adapted
    - to describe a target function by parameters; and

to optimize the parameters based on the wind signal such that a cost function being dependent on the target function adopts an extremum, in order to derive optimized parameters to be used for controlling the wind turbine at the point in time, wherein the target function maps time (t) to a first component representing a blade pitch angle (β) and to a second component representing a generator torque (Mg) or generator power and wherein the parameters include a first set of parameters relating to the first component and a second set of parameters relating to the second component, wherein for a time instance t each the first component and/or the second component is representable by:

$$y(t) = B + Sum[c_j * G_j(b_j + a_j*t)],$$

wherein the Sum is taken by running j over N values,
wherein B, $c_j$, $b_j$, $a_j$ are scalar constants to be optimized, wherein $G_j$ are scalar valued predetermined activation functions, in particular non-linear functions, and
wherein the $c_j$, $b_j$, $a_j$ and $G_j$ for the first component form the first set of parameters of the target function and/or wherein the $c_j$, $b_j$, $a_j$ and $G_j$ for the second component form the second set of parameters of the target function.


**Patentansprüche**

1. Verfahren zum Bestimmen optimierter Parameter (aj, bj, cj, B) einer Zielfunktion (y(t)) zur Steuerung einer Windturbine (301), wobei das Verfahren umfasst:

    - Empfangen eines Windsignals (Vw), das eine Windgeschwindigkeit zu einem Zeitpunkt (Δ) angibt;
    - Beschreiben der Zielfunktion durch Parameter (aj, bj, cj, B) ;
    - Optimieren der Parameter auf der Basis des Windsignals, derart, dass eine Kostenfunktion, die von der Zielfunktion abhängig ist, ein Extremum annimmt, um optimierte Parameter abzuleiten, die zur Steuerung der Windturbine zu dem Zeitpunkt zu verwenden sind,

    wobei die Zielfunktion die Zeit (t) auf eine erste Komponente, die einen Rotorblattanstellwinkel (β) repräsentiert, und auf eine zweite Komponente, die ein Generatordrehmoment (Mg) oder eine Generatorleistung repräsentiert, abbildet und wobei die Parameter eine erste Menge von Parametern, welche die erste Komponente betreffen, und eine zweite Menge von Parametern, welche die zweite Komponente betreffen, enthalten,
    wobei für einen Zeitpunkt t die erste Komponente und/oder die zweite Komponente jeweils darstellbar sind/ist durch:

$$y(t) = B + Summe[c_j * G_j(b_j + a_j*t)],$$

    wobei die Summe gebildet wird, indem man j N Werte durchlaufen lässt,
    wobei B, $c_j$, $b_j$, $a_j$ skalare Konstanten sind, die zu optimieren sind,
    wobei $G_j$ skalarwertige vorbestimmte Aktivierungsfunktionen sind, insbesondere nichtlineare Funktionen, und
    wobei die $c_j$, $b_j$, $a_j$ und $G_j$ für die erste Komponente die erste Menge von Parametern der Zielfunktion bilden und/oder
    wobei die $c_j$, $b_j$, $a_j$ und $G_j$ für die zweite Komponente die zweite Menge von Parametern der Zielfunktion bilden.

2. Verfahren nach Anspruch 1, wobei die Aktivierungsfunktionen ($G_j$) eine Sigmoidfunktion und/oder eine radiale Basisfunktion beinhalten, insbesondere eine hyperbolische Funktion, weiterhin insbesondere eine hyperbolische Tangensfunktion.

3. Verfahren nach einem der vorhergehenden Ansprüche, wobei die Zielfunktionen eine Zeitentwicklung über 5 s bis 40 s beschreiben, insbesondere über 10 s bis 20 s.

4. Verfahren nach einem der vorhergehenden Ansprüche, wobei das Optimieren der Parameter ferner umfasst:

    - Berücksichtigen, in der Kostenfunktion, einer Vielzahl von Werten der Zielfunktion, die zu einer Vielzahl von, insbesondere äquidistanten, Momenten (Δ, 2*Δ, 3*Δ, ...) nach dem Zeitpunkt ermittelt wurden,

    wobei eine Anzahl der Momente ($N_{finite}$) nach dem Zeitpunkt größer, insbesondere um einen Faktor zwischen 2 und 50, insbesondere 10, größer, als eine Anzahl (3*N +1) der Parameter ist.

5. Verfahren nach Anspruch 4, wobei ein Zeitabstand (Δ) zwischen aufeinanderfolgenden Momenten der Vielzahl der Momente (Δ, 2*Δ, 3*Δ, ...) nach dem Zeitpunkt zwischen 5 ms und 1 s, insbesondere zwischen 10 ms und 300 ms, beträgt.

6. Verfahren nach Anspruch 4 oder 5, wobei in der Kostenfunktion die Windgeschwindigkeit (Vw) als konstant über die Vielzahl von Momenten nach dem Zeitpunkt betrachtet wird.

7. Verfahren nach Anspruch 4 oder 5, wobei in der Kostenfunktion die Windgeschwindigkeit (Vw) zu der Vielzahl von Momenten nach dem Zeitpunkt vorhergesagt wird.

8. Verfahren nach einem der vorhergehenden Ansprüche, welches ferner umfasst:

   - Empfangen eines weiteren Windsignals, das eine weitere Windgeschwindigkeit zu einem weiteren Zeitpunkt nach dem Zeitpunkt angibt;
   - Beschreiben einer weiteren Zielfunktion durch weitere Parameter;
   - Optimieren der weiteren Parameter auf der Basis des weiteren Windsignals, derart, dass die Kostenfunktion, die von der weiteren Zielfunktion abhängig ist, ein Extremum annimmt, um weitere optimierte Parameter abzuleiten, die zur weiteren Steuerung der Windturbine zu dem weiteren Zeitpunkt zu verwenden sind.

9. Verfahren nach einem der vorhergehenden Ansprüche, wobei die Kostenfunktion von einer Leistungsabgabe (P) und insbesondere von einer Last (MechLoad) der Turbine abhängt.

10. Verfahren nach einem der Ansprüche 1 bis 9, welches ferner umfasst:

    - Sicherstellen, dass die erste Komponente und/oder die zweite Komponente unterhalb eines Schwellenwertes liegen/liegt und/oder innerhalb eines vorbestimmten Bereiches liegen/liegt und/oder sich im Laufe der Zeit innerhalb eines vorbestimmten Änderungsbereiches ändern/ändert.

11. Verfahren nach einem der Ansprüche 1 bis 10, welches ferner umfasst:

    - Optimieren des Rotorblattanstellwinkels zu dem Zeitpunkt und/oder Optimieren des Generatordrehmoments zu dem Zeitpunkt und Optimieren der Parameter, sodass die Kostenfunktion, welche von dem Rotorblattanstellwinkel zu dem Zeitpunkt abhängig ist und/oder von dem Generatordrehmoment zu dem Zeitpunkt abhängig ist, das Extremum annimmt.

12. Verfahren zur Steuerung einer Windturbine (301), wobei das Verfahren umfasst:

    - Ausführen eines Verfahrens zum Bestimmen optimierter Parameter einer Zielfunktion (y(t), 203, 209) zur Steuerung einer Windturbine nach einem der vorhergehenden Ansprüche;
    - Auswerten der Zielfunktion zu dem Zeitpunkt, wobei die Zielfunktion durch die bestimmten optimierten Parameter beschrieben wird; und
    - Steuern der Windturbine, insbesondere eines Rotorblattanstellwinkels (β) und/oder eines Generatordrehmoments (Mg), auf der Basis eines Ergebnisses der Auswertung der Zielfunktion.

13. Anordnung (313) zum Bestimmen optimierter Parameter ($a_j$, $b_j$, $c_j$, B) einer Zielfunktion (y(t)) zur Steuerung einer Windturbine, wobei die Anordnung umfasst:

    - eine Eingangsklemme (315), die dazu eingerichtet ist, ein Windsignal (Vw) zu empfangen, das eine Windgeschwindigkeit zu einem Zeitpunkt angibt;
    - ein Berechnungsmodul, das dazu eingerichtet ist,
    - eine Zielfunktion durch Parameter zu beschreiben; und die Parameter auf der Basis des Windsignals zu optimieren, derart, dass eine Kostenfunktion, die von der Zielfunktion abhängig ist, ein Extremum annimmt, um optimierte Parameter abzuleiten, die zur Steuerung der Windturbine zu dem Zeitpunkt zu verwenden sind,

    wobei die Zielfunktion die Zeit (t) auf eine erste Komponente, die einen Rotorblattanstellwinkel (β) repräsentiert, und auf eine zweite Komponente, die ein Generatordrehmoment (Mg) oder eine Generatorleistung repräsentiert, abbildet und wobei die Parameter eine erste Menge von Parametern, welche die erste Komponente betreffen, und eine zweite Menge von Parametern, welche die zweite Komponente betreffen, enthalten,

wobei für einen Zeitpunkt t die erste Komponente und/oder die zweite Komponente jeweils darstellbar sind/ist durch:

$$y(t) = B + \text{Summe}[c_j * G_j(b_j + a_j*t)],$$

wobei die Summe gebildet wird, indem man j N Werte durchlaufen lässt,
wobei $B$, $c_j$, $b_j$, $a_j$ skalare Konstanten sind, die zu optimieren sind,
wobei $G_j$ skalarwertige vorbestimmte Aktivierungsfunktionen sind, insbesondere nichtlineare Funktionen, und
wobei die $c_j$, $b_j$, $a_j$ und $G_j$ für die erste Komponente die erste Menge von Parametern der Zielfunktion bilden, und/oder
wobei die $c_j$, $b_j$, $a_j$ und $G_j$ für die zweite Komponente die zweite Menge von Parametern der Zielfunktion bilden.

## Revendications

1. Procédé de détermination de paramètres optimisés ($a_j$, $b_j$, $c_j$, B) d'une fonction cible (y(t)) pour commander une éolienne (301), le procédé comprenant :

  - réception d'un signal de vent (Vw) indiquant une vitesse du vent à un moment donné ($\Delta$) ;
  - description de la fonction cible par des paramètres ($a_j$, $b_j$, $c_j$, B) ;
  - optimisation des paramètres sur la base du signal de vent, de telle sorte qu'une fonction de coût qui dépend de la fonction cible adopte un extrémum afin d'obtenir des paramètres optimisés destinés à être utilisés pour commander l'éolienne au moment donné,

  dans lequel la fonction cible met en correspondance le temps (t) avec une première composante représentant un angle d'inclinaison de pale ($\beta$) et avec une seconde composante représentant un couple de génératrice (Mg) ou une puissance de génératrice, et dans lequel les paramètres comprennent un premier ensemble de paramètres se rapportant à la première composante et un second ensemble de paramètres se rapportant à la seconde composante, dans lequel, pour une instance de temps t, chacune de la première composante et/ou de la seconde composante peut être représentée par :

$$y(t) = B + \text{Somme}[c_j * G_j(b_j + a_j*t)],$$

  où la Somme est obtenue en exécutant j sur N valeurs,
  où $B$, $c_j$, $b_j$, $a_j$ sont des constantes scalaires devant être optimisées,
  où $G_j$ sont des fonctions d'activation prédéterminées à valeurs scalaires, en particulier des fonctions non linéaires, et
  où $c_j$, $b_j$, $a_j$ et $G_j$ pour la première composante forment le premier ensemble de paramètres de la fonction de cible, et/ou
  où $c_j$, $b_j$, $a_j$ et $G_j$ pour la seconde composante forment le second ensemble de paramètres de la fonction cible.

2. Procédé selon la revendication 1, dans lequel les fonctions d'activation ($G_j$) incluent une fonction sigmoïde et/ou une fonction de base radiale, en particulier une fonction hyperbolique, en outre, en particulier, une fonction de tangente hyperbolique.

3. Procédé selon l'une quelconque des revendications précédentes, dans lequel les fonctions cibles décrivent l'évolution dans le temps sur 5 à 40 s, en particulier sur 10 à 20 s.

4. Procédé selon l'une quelconque des revendications précédentes, dans lequel l'optimisation des paramètres comprend en outre :

  - prise en compte, dans la fonction de coût, d'une pluralité de valeurs de la fonction cible prises en une pluralité de points temporels ($\Delta$, $2^*\Delta$, $3^*\Delta$, ...), en particulier équidistants, après le moment donné,

  dans lequel un nombre de points temporels ($N_{finis}$) après le moment donné, est plus grand, en particulier d'un facteur compris entre 2 et 50, en particulier 10, qu'un nombre (3*N +1) des paramètres.

5. Procédé selon la revendication 4, dans lequel une distance temporelle entre des points temporels subséquents de la pluralité des points temporels ($\Delta$, 2* $\Delta$, 3* $\Delta$, ...) après le moment donné est comprise entre 5 ms et 1 s, en particulier entre 10 ms et 300 ms.

6. Procédé selon la revendication 4 ou 5, dans lequel, dans la fonction de coût, la vitesse du vent (Vw) est considérée comme étant constante sur la pluralité de points temporels après le moment donné.

7. Procédé selon la revendication 4 ou 5, dans lequel, dans la fonction de coût, la vitesse du vent (Vw) à la pluralité de points temporels après le moment donné est prédite.

8. Procédé selon l'une quelconque des revendications précédentes, comprenant en outre :

   - réception d'un autre signal de vent indiquant une autre vitesse du vent à un autre moment donné après le moment donné ;
   - description d'une autre fonction cible par d'autres paramètres ;
   - optimisation des autres paramètres sur la base de l'autre signal de vent, de telle sorte que la fonction de coût qui dépend de l'autre fonction cible adopte un extrémum afin d'obtenir d'autres paramètres optimisés destinés à être utilisés pour une autre commande de l'éolienne à l'autre moment donné.

9. Procédé selon l'une quelconque des revendications précédentes, dans lequel la fonction de coût dépend d'une sortie de puissance (P), et en particulier d'une charge (MechLoad) de la turbine.

10. Procédé selon l'une quelconque des revendications 1 à 9, comprenant en outre :

   - assurance que la première composante et/ou la seconde composante se trouve en dessous d'un seuil et/ou se trouve dans une plage prédéterminée et/ou varie dans le temps dans une plage de variation prédéterminée.

11. Procédé selon l'une quelconque des revendications 1 à 10, comprenant en outre :

   - optimisation de l'angle d'inclinaison de la pale de rotor au moment donné et/ou optimisation du couple de la génératrice au moment donné et optimisation des paramètres, de telle sorte que la fonction de coût qui dépend de l'inclinaison de la pale au moment donné et/ou dépend du couple de la génératrice au point dans le temps adopte l'extrémum.

12. Procédé de commande d'une éolienne (301), le procédé comprenant :

   - exécution d'un procédé de détermination de paramètres optimisés d'une fonction cible (y(t), 203, 209) pour commander une éolienne selon l'une quelconque des revendications précédentes ;
   - évaluation de la fonction cible au moment donné, la fonction cible étant décrite par les paramètres optimisés déterminés ; et
   - commande de l'éolienne, en particulier d'un angle d'inclinaison de la pale de rotor ($\beta$) et/ou d'un couple de génératrice (Mg), sur la base d'un résultat de l'évaluation de la fonction cible.

13. Agencement (313) pour déterminer des paramètres optimisés ($a_j$, $b_j$, $c_j$, B) d'une fonction cible (y(t)) pour commander une éolienne, l'agencement comprenant :

   - une borne d'entrée (315) adaptée pour recevoir un signal de vent (Vw) indiquant une vitesse du vent à un moment donné ;
   - un module de calcul adapté pour

décrire une fonction cible par des paramètres ; et optimiser les paramètres sur la base du signal de vent, de telle sorte qu'une fonction de coût qui dépend de la fonction cible adopte un extrémum afin d'obtenir des paramètres optimisés destinés à être utilisés pour commander l'éolienne au moment donné, dans lequel la fonction cible met en correspondance le temps (t) avec une première composante représentant un angle d'inclinaison de pale ($\beta$) et avec une seconde composante représentant un couple de génératrice (Mg) ou une puissance de génératrice, et dans lequel les paramètres comprennent un premier ensemble de paramètres se rapportant à la première composante et un second ensemble des paramètres se rapportant à la seconde composante, dans lequel, pour une instance de temps t, chacune de la première composante et/ou de la seconde composante peut être représentée par :

$$y(t) = B + \text{Somme } [c_j * G_j(b_j + a_j * t)],$$

où la Somme est obtenue en exécutant j sur N valeurs,

où B, $c_j$, $b_j$, $a_j$ sont des constantes scalaires devant être optimisées,

où Gj sont des fonctions d'activation prédéterminées à valeurs scalaires, en particulier des fonctions non linéaires, et

où $c_j$, $b_j$, $a_j$ et $G_j$ pour la première composante forment le premier ensemble de paramètres de la fonction de cible, et/ou

où $c_j$, $b_j$, $a_j$ et $G_j$ pour la seconde composante forment le second ensemble de paramètres de la fonction cible.

FIG 1

FIG 2

FIG 3

EP 2 541 052 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2476316 A